# EUROPÄISCHE PATENTSCHRIFT

(11) **EP 1 130 739 B1**
(45) Veröffentlichungstag und Bekanntmachung des Hinweises auf die Patenterteilung: **10.04.2013**
(21) Anmeldenummer: 01104704.0
(22) Anmeldetag: 26.02.2001
(51) Int. Cl.: H02K 1/18, H02K 1/20, H02K 51/00, H02K 1/16

(54) **Stator für eine elektrische Maschine**
Stator for electrical machine
Stator pour une machine électrique

(30) Priorität: 02.03.2000 DE 10010028
(43) Veröffentlichungstag der Anmeldung: 05.09.2001
(73) Patentinhaber: Volkswagen Aktiengesellschaft, 38440 Wolfsburg (DE)
(72) Erfinder: Schulze, Bernd-Guido, Dr., 38442 Wolfsburg (DE); Hanke, Stefan, 38104 Braunschweig (DE)

(56) Entgegenhaltungen:
- CH-A- 317 647
- FR-A- 697 797
- FR-A1- 2 738 686
- US-A- 1 959 527
- US-A- 4 095 922
- US-A- 4 839 545
- US-A- 5 461 271
- US-A- 5 675 203
- US-A- 5 734 241
- US-A- 5 859 483

## Beschreibung

Die vorliegende Erfindung betrifft einen Stator nach dem Oberbegriff des Anspruches 1 für eine elektrische Maschine, welche insbesondere in Form eines elektromagnetischen Drehmomentwandlers oder elektromagnetischen Getriebes für ein Kraftfahrzeug ausgestaltet ist.

Die US 4 095 922 A offenbart einen Stator mit einem geschlitzten schichtartig zusammengesetzten magnetischen Kern, welcher Wicklungen aufweist, die in diesen Schlitzen angeordnet sind.

Die US 5 675 203 A offenbart eine Kombination aus einem elektrischen Motor und einem elektrischen Generator, wobei ein Stator axial bezüglich der Rotoren des Generators und Motors verschiebbar ist.

Die US 5 859 483 A beschreibt einen Stator mit nebeneinander angeordneten Lagen aus Eisen oder Stahl. Dabei sind Kühlungslöcher versetzt innerhalb der Lagen angeordnet.

Die CH 317 647 A offenbart ein Ständerblechpaket für eine elektrische Maschine, welches mit Vorsprüngen zur Kühlung versehen sind.

Die US 5 734 241 A zeigt einen Stator mit mehreren Lagen, wobei Öffnungen zur Aufnahme von hervorragenden Abschnitten an jeweils derselben Stelle ausgebildet sind.

Die US 5 461 271 A offenbart einen Stator mit mehreren übereinander angeordneten Lagen, wobei Windungen um den Stator gewickelt sind.

In der DE 44 08 719 C1 der Anmelderin ist eine als elektrisches Getriebe oder Drehmomentwandler dienende Generator-Motor-Kombination beschrieben, wobei in einem Gehäuse ein gemeinsamer Stator für einen Generator-Rotor und einen (Elektro) Motor-Rotor vorgesehen ist. Der Stator ist innerhalb der beiden hohlzylindrischen Rotoren axial verschiebbar gelagert. Die Statorwicklung des Stators wird abhängig von der relativen Lage der Permanentmagnete der beiden Rotoren geschaltet, um eine kontinuierliche Drehmomentübertragung von dem Generator-Rotor auf den Motor-Rotor sicherzustellen. Durch axiales Verschieben des Stators kann die Drehzahl und das auf die mit dem Motor-Rotor verbundene Ausgangswelle übertragbare Abtriebsdrehmoment eingestellt werden, da dadurch die im Generator- bzw. Motor-Rotor wirksame Leiterlänge der Statorwicklung entsprechend verändert wird. Wird der Stator zu dem Motor-Rotor hin verschoben, erhöht sich das abtriebsseitige Drehmoment und die Abtriebsdrehzahl geht zurück. Wird der Stator hingegen zu dem Generator-Rotor hin verschoben, nimmt die Abtriebsdrehzahl an der Ausgangswelle zu, während das Abtriebsdrehmoment verringert wird. Diese Generator-Motor-Kombination kann somit in Kraftfahrzeugen als elektromagnetischer Drehmomentwandler oder elektromagnetisches Getriebe verwendet werden.

Das zuvor beschriebene elektrische Getriebe kann, durch eine elektronische Schaltung gesteuert, im gleichen Drehsinn von Generator und Motor oder auch entgegengesetzt betrieben werden. In beiden Fällen muß der Stator zur Abstützung der Umfangskräfte der beiden elektrische Maschinen herangezogen werden. Bei gleicher Drehrichtung entspricht die Abstützung der Differenz der in dem Generator und dem Motor wirkenden Umfangskräfte. Bei entgegengesetzter Drehrichtung entspricht die Abstützung hingegen der Summe der in dem Generator und dem Motor wirkenden Umfangskräfte. Neben der axialen Verstellbarkeit des Stators muß also auch auf eine geeignete Momentenabstützung geachtet werden.

Elektrische Maschinen erzeugen prinzipbedingt durch die ständige Flußänderung in den flußführenden Materialien Eisenverluste (Ummagnetisierungsverluste und Wirbelströme). Zur Verringerung dieser Verluste ist es üblich, das flußführende Material aus dünnen Spezial-Elektroblechen geschichtet aufzubauen, die gegeneinander elektrisch isoliert sind. Je dünner dieser Bleche ausgestaltet sind, desto geringer werden die Wirbelstromverluste. Eine bewußt hochfrequent und oberwellenreich ausgestaltete elektrische Maschine, wie beispielsweise das zuvor beschriebene elektrische Getriebe, benötigt daher zur Erzielung eines günstigen Wirkungsgrads einen Stator, bei dem das flußführende Material aus Blechen mit einer Dicke von höchstens 1/10mm aufgebaut ist. Trotz dieser Ausgestaltung entstehen jedoch in den Blechen immer noch so hohe Verluste, daß der Stator zur Erlangung einer ausreichenden Betriebssicherheit gekühlt werden muß, wobei üblicherweise Wasser als Kühlmittel verwendet wird.

Bei der zuvor beschriebenen schichtweisen Ausgestaltung des flußführenden Materials besteht allgemein das Problem, das flußführende Material auf dem Statorträger aufzubringen und mit diesem derart zu verbinden, daß dabei nicht wieder weitere Eisenverluste durch schweißtechnisch bedingte Gefügeveränderungen in den Blechen o.ä. entstehen. Wird das Blechpaket beispielsweise mit Hilfe eine Klebeverbindung an dem Statorträger befestigt, können der Temperatureinfluß und die mechanischen Schwingungen auf Dauer nur schwer eingeschätzt werden, und es muß zumindest mit Undichtigkeiten gerechnet werden.

Die vorliegende Erfindung stellt sich die Aufgabe, ein elektrisches Getriebe bereitzustellen, bei welchem der Stator gegenüber dem Rotor des Generators und gegenüber dem Rotor des Motors verschiebbar ist..

Diese Aufgabe wird erfindungsgemäß durch ein elektrisches Getriebe mit den Merkmalen des Anspruches 1 gelöst. Die Unteransprüche definieren bevorzugte und vorteilhafte Ausführungsformen der vorliegenden Erfindung.

Ein Stator ist vollständig aus mehreren übereinander geschichteten und miteinander verbundenen Blechlagen aufgebaut, d.h. der Statorträger und das flußführende Material sind aus demselben geschichteten Blechpaket aufgebaut. Die einzelnen Bleche sind derart geformt, daß sie Nuten zur Aufnahme mindestens einer Statorwicklung und vorzugsweise auch Wasserkanalöffnungen sowie Öffnungen für die Lagerung und Momentenabstützung enthalten. Die Schneide- oder Formtechnik der Bleche ist unerheblich.

Die Bleche werden blockweise geschichtet. Durch das Schichten verschieden ausgestalteter Blechabschnitte kann erzielt werden, daß sich in dem durch die einzelnen Wasserkanalöffnungen gebildeten umlaufenden Wasserkanal Stege ausbilden, welche einerseits die Stabilität erhöhen und andererseits durch Vergrößerung der kühlbaren Oberfläche die Wärmeabfuhr an das Kühlmittel verbessern. Die Zu- und Ableitung des Kühlmittel zu dem Kühlkanal kann auf übliche Art und Weise über bewegliche Schläuche oder über teleskopartige Führungen erfolgen. Die Dichtigkeit des Kühl- oder Wasserkanals kann durch Verkleben der Bleche nach bekannten Verfahren erreicht werden.

Die Bleche müssen beim Schichten elektrisch gegeneinander isoliert gefügt werden. Die Isolation kann durch geeignete Beschichtung oder durch Zwischenlagen erreicht werden. Die einzelnen Bleche können an geeigneten Stellen miteinander durch feine Schweißnähte, durch Stanzpaketieren oder durch Zugankertechniken verbunden werden. Die letzte Festigkeit bekommt der Stator nach dem Aufbringen der Statorwicklung durch das Vergießen derselben.

Die vorliegende Erfindung wird in einem elektrischen Getriebe eingesetzt. Zu diesem Zweck sind an den einzelnen Blechen Öffnungen oder Augen ausgebildet, die einerseits der Momentenabstützung und andererseits der Axialverstellung des Stators dienen. In diese Augen können Hülsen eingebaut sein, die selbst ein Gleitlager darstellen oder als Aufnahme für ein Linearwälzlager oder gleichen dienen. Die axiale Verstellung des Stators kann beispielsweise über einen Spindeltrieb, eine Hydraulik o.ä. erfolgen. Erfindungsgemäß ist ein derartiges Auge zur Momentenabstützung und Längsführung des Stators mit einem Linearwälzlager ausgestattet, während ein weiteres Auge als hydraulischer Zylinder ausgebildet ist, der auf einem feststehenden zweiseitig wirkenden hydraulischen Kolben gelagert ist und die Axialverstellung des Stators bewirkt.

Die Erfindung ist jedoch nicht auf die Verwendung in einem elektrischen Getriebe bzw. einer Generator-Motor-Kombination beschränkt, sondern kann allgemein in jeder Art einer elektrischen Maschine eingesetzt werden.

Die vorliegende Erfindung wird nachfolgend unter Bezugnahme auf die beigefügten Zeichnungen anhand eines bevorzugten Ausführungsbeispiels beschrieben. Dabei zeigt
- Fig. 1: eine perspektivische Ansicht eines Stators gemäß einem bevorzugten Ausführungsbeispiel der vorliegenden Erfindung,
- Fig. 2: eine Draufsicht sowie verschiedene Querschnittsansichten des in Fig. 1 gezeigten Stators, und
- Fig. 3: eine Längsquerschnittansicht eines elektrischen Getriebes, in dem die vorliegende Erfindung eingesetzt werden kann.

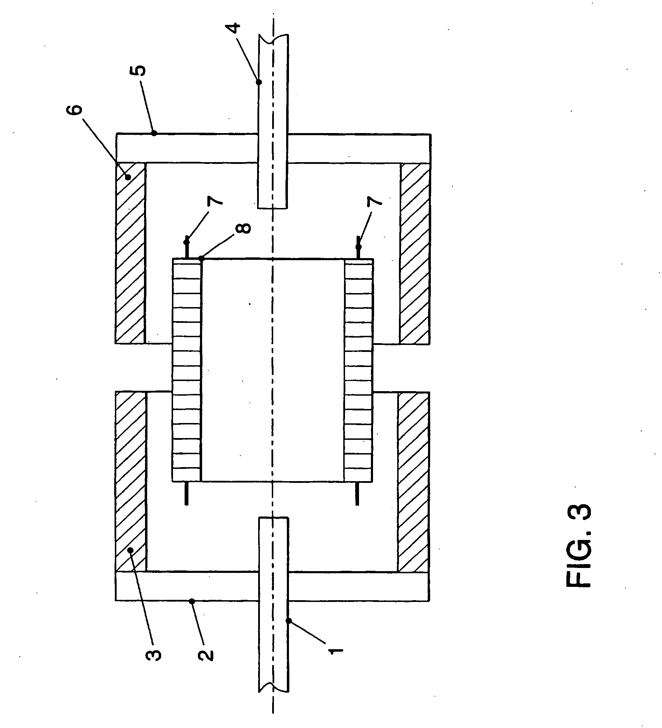

Das in Fig. 3 gezeigte elektrische Getriebe umfaßt eine Eingangswelle 1, die mit einer nicht gezeigten Antriebsmaschine, insbesondere einem Verbrennungsmotor eines Kraftfahrzeugs, verbunden ist. Diese Eingangswelle 1 trägt einen Generator-Rotor 2, der hohlzylindrisch ausgestaltet ist und mehrere mit wechselnder Polarität entlang seines Umfangs verteilte Permanentmagnete 3 aufweist. Auf der gegenüberliegenden Seite ist eine Ausgangswelle 4 vorgesehen, die mit einem hohlzylindrischen (Elektro)Motor-Rotor 5 verbunden ist. Auch der Motor-Rotor 5 trägt mehrere entlang seines Umfangs verteilte Permanentmagnete 6 mit wechselnder Polarität.

Im Innenraum der beiden axial nebeneinander angeordneten Rotoren 2 und 5 ist ein hohlzylindrischer Stator 8 angeordnet, der an Stangen 7 axial, d.h. in Längsrichtung, verschiebbar gelagert ist. Der Stator 8 trägt mindestens eine Statorwicklung.

Durch die axiale Verschiebbarkeit des Stators 8 wird bewirkt, daß die für den Generator-Rotor 2 bzw. Motor-Rotor 5 wirksame Leiterlänge der Statorwicklung(en) variiert werden kann. Auf dieser Variation der wirksamen Leiterlänge in den Magnetfelder des Generator-Rotors 2 bzw. Motor-Rotors 5 beruht die Steuer- bzw. Regelbarkeit der Drehzahl- und Drehmomentübersetzung des dargestellten Getriebes. Die mit Permanentmagneten bestückten Rotoren 2 bzw. 5 wirken auf die Statorwicklung des Stators 8. Durch die Drehung des Generator-Rotors 2 wird eine Änderung des magnetischen Flusses hervorgerufen, die in der Statorwicklung eine elektromotorische Kraft induziert, wodurch es zu einem entsprechenden elektrischen Stromfluß kommt. Dieser Stromfluß bremst den Generator-Rotor 2 ab und treibt gleichzeitig den Motor-Rotor 5 an. Die durch die daraus resultierende Drehung des Motor-Rotors 5 wiederum hervorgerufene Flußänderung induziert in der Statorwicklung eine elektromotorische Gegenkraft. Da die für den Generator-Rotor 2 bzw. Motor-Rotor 5 wirksame Länge der Statorwicklung jeweils aufgeteilt werden kann, ergibt sich eine kontinuierliche Drehmomentwandlung.

Wie bereits erwähnt worden ist, wird in dem Stator 8 eine Spannung induziert, falls der Generator-Rotor 2 angetrieben wird (beispielsweise von einem Verbrennungsmotor). Der daraus resultierende Stromfluß in der Statorwicklung hat eine auf den Motor-Rotor 5 wirkende Kraft zur Folge, welche dieselbe Richtung wie die Drehbewegung des Generator-Rotors 2 besitzt, falls den Permanentmagneten des Generator-Rotors 2 die Permanentmagnete des Motor-Rotors 5 mit jeweils entgegengesetzter Polarität gegenüberliegen. Stehen sich jeweils zwei Permanentmagnete gleicher Polarität gegenüber, wirkt die auf den Motor-Rotor 5 übertragene Kraft in entgegengesetzter Richtung zu der Drehrichtung des Generator-Rotors 2.

Da die Permanentmagnete auf den beiden Rotoren 2 und 5 jeweils mit abwechselnder Polarität angeordnet sind, wirkt bei der Drehung des Generator-Rotors eine Kraft mit ständig wechselndem Vorzeichen auf den Motor-Rotor, falls die Statorwicklung dauerhaft kurzgeschlossen ist. Es würde daher auch bei abtriebsseitigem Leerlauf keine Drehbewegung zustande kommen. Daher ist für den Stator 8 eine (nicht gezeigte) Schalteinheit erforderlich, die für die jeweils gewünschte "richtige" Stellung der Permanentmagnete einen Stromfluß über die Statorwicklung ermöglicht und für die unerwünschte "falsche" Stellung der Permanentmagnete einen Stromfluß unterbindet. Welche Stellung der Permanentmagnete "richtig" oder "falsch" ist, hängt wie beschrieben von der gewünschten Antriebsrichtung des Motor-Rotors 5 ab. Wird beispielsweise ein Antrieb des Motor-Rotors 5 in dieselbe Richtung wie die Drehrichtung des Generator-Rotors 2 gewünscht, wird mit Hilfe dieser Schalteinheit ein Stromfluß immer dann unterbrochen, wenn sich Permanentmagnete mit identischer Polarität gegenüberstehen. Die Ansteuerung der Schalteinheit kann durch eine (ebenfalls nicht gezeigte) Steuereinheit erfolgen, der die augenblickliche Stellung der Permanentmagnete auf dem Generator-Rotor 2 und dem Motor-Rotor 5 beispielsweise von (nicht gezeigten) Magnetsensoren mitgeteilt wird.

Nachdem zuvor die Anwendung des Stators in einem elektrischen Getriebe beschrieben worden ist, soll nachfolgend näher der Aufbau des Stators 8 erläutert werden.

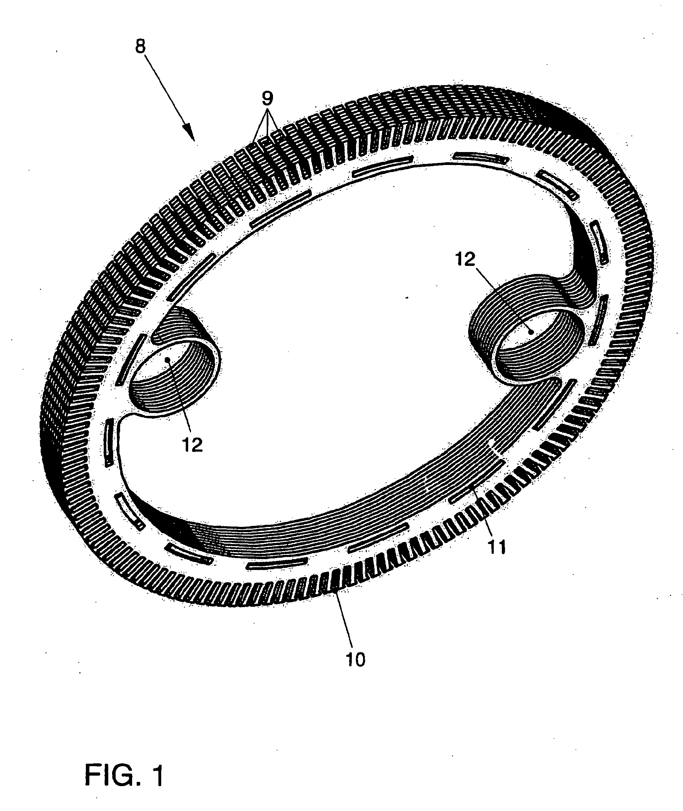

Wie in Fig. 1 gezeigt ist, besteht der dargestellte Stator 8 aus mehreren übereinander geschichteten Blechlagen 9, die miteinander verbunden sind. Die Verbindung der einzelnen Bleche 9 kann an geeigneten Stellen durch feine Schweißnähte, durch Stanzpaketieren und/oder durch Zugankertechniken erfolgen.

Der Stator 8 sowie die einzelnen Bleche 9 weisen eine ringförmige Struktur auf. An der Außenseite jedes ringförmigen Blechs 9 sind Ausnehmungen ausgebildet, die zur Aufnahme mindestens einer Statorwicklung dienen. Die Ausnehmungen sind an den einzelnen Blechen 9 an identischen Stellen ausgebildet, so daß nach Übereinanderschichten der Bleche 9 die in Fig. 1 gezeigten durchgehenden Nuten 10 zur Aufnahme der Statorwicklung entstehen.

An der Innenseite jedes ringförmigen Blechs 9 sind ebenfalls an jeweils identischen Stellen mindestens zwei Augen 12 ausgebildet, so daß nach Übereinanderschichten der Bleche 9 die in Fig. 1 gezeigten Bohrungen erhalten werden, durch welche die in Fig. 3 gezeigten Stangen 7 zur Lagerung und axialen Verschiebung des Stators 8 geführt werden. In diese Bohrungen kann jeweils eine Hülse eingebaut sein, welche selbst ein Gleitlager darstellt oder als Aufnahme für ein Linearwälzlager dient. Gemäß einer besonders vorteilhaften Ausführungsform kann eine Bohrung bzw. ein Auge 12 zur Momentenabstützung und Längsführung mit einem Linearwälzlager ausgestattet sein, während das andere Auge 12 als ein hydraulischer Zylinder ausgebildet sein kann, der auf einem feststehenden zweiseitig wirkenden hydraulischen Kolben gelagert ist und somit zusätzlich die Axialverstellung des Stators 8 bewirkt.

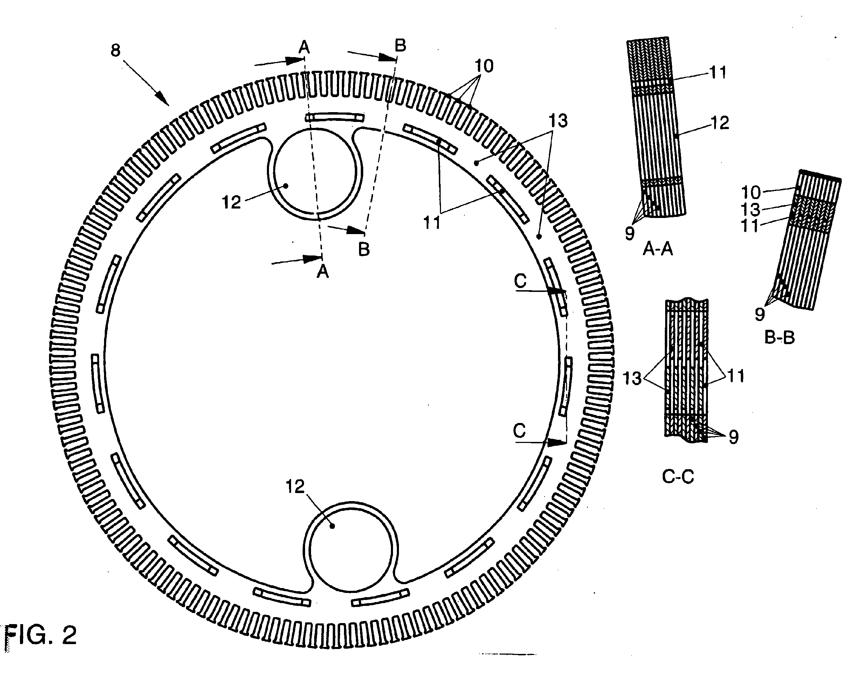

In jedem Blech 9 sind in Umfangsrichtung mehrere vorzugsweise gleichmäßig verteilte schlitzartige Wasserkanalöffnungen 11 ausgebildet, welche - wie in Fig. 2 gezeigt - durch Zwischenstege 13 voneinander beanstandet sind. Nach Übereinanderschichten der Bleche 9 bilden die Wasserkanalöffnungen 11 der einzelnen Bleche entsprechende Wasserkanäle, die durch den Stator 8 verlaufen. Besonders vorteilhaft ist es, wenn die Wasserkanalöffnungen 11 in den einzelnen Blechen 9 derart von Blech zu Blech zueinander versetzt ausgebildet sind, daß sich nach Übereinanderschichten der Bleche 9 ein einziger vollständig umlaufender Wasserkanal ergibt und in diesem umlaufenden Wasserkanal Stege ausgebildet werden, die einerseits die Stabilität des Stators 8 erhöhen und andererseits durch Vergrößerung der kühlbaren Oberfläche die Wärmeabfuhr an das Kühlmittel verbessern.

Die Lage der Wasserkanalöffnungen 11 in den einzelnen Blechen 9 zueinander kann insbesondere den in Fig. 1 gezeigten Querschnittansichten entlang der Schnittlinien A-A, B-B und C-C entnommen werden. Bei dem dargestellten Ausführungbeispiel sind die Wasserkanalöffnungen 11, wie insbesondere der in Fig. 2 gezeigten Schnittansicht entlang der Schnittlinie C-C entnommen werden kann, nach dem Übereinanderschichten der Bleche 9 von der einen Seite des Stators 8 zu der anderen Seite abwechselnd nach links und rechts zueinander versetzt.

Ein besonders vorteilhafter Blechschnitt ist dadurch gegeben, daß die Wasserkanalöffnungen 11 nicht symmetrisch zu den Augen 12 angeordnet sind, sondern - wie in Fig. 1 und Fig. 2 gezeigt ist - versetzt dazu. Dies hat zur Folge, daß durch einfaches Wenden einzelner Bleche 9 oder geschichteter Blechpaket mit demselben Blechschnitt der Wasserkanal ausgebildet werden kann. Dadurch kann besonders bei Anwendung von Stanztechniken für den Blechschnitt die Anzahl der benötigten Werkzeuge verringert werden. Die Dichtigkeit des Wasserkanals kann durch Verkleben der einzelnen Bleche 9 nach bekannten Verfahren erreicht werden.

Elektrobleche verlieren durch Bearbeitungen, wie beispielsweise Stanzen, Schneiden, Schleifen usw., ein Teil ihrer guten Eigenschaften. Durch Weichglühen in einer Wasserstoffumgebung bei Temperaturen von 600 - 700°C können diese jedoch wieder weitgehend zurückerhalten werden. Im vorliegenden Fall bietet es sich an, den fertig geschichteten Stator 8 eine Wärmebehandlung zu unterziehen. Dazu wird der Stator 8 zwischen formstabilisierenden Platten eingespannt und gekühlt. Ein Verziehen ist dabei im Gegensatz zur Wärmebehandlung der einzelnen Bleche 9 nicht zu befürchten. Die erforderliche elektrische Isolation zwischen den einzelnen Blechen 9 wird dabei durch hochtemperaturfeste Beschichtungen, wie z. B. durch eine Phosphatierung, erreicht. Die Abdichtung des Wasser- oder Kühlkanals kann dann z. B. durch stark kriechfähige Kleber oder Lacke im fertigen Zustand erfolgen.

## Patentansprüche

1. Elektrisches Getriebe,
mit einem an einer Eingangswelle (1) befestigten ersten Rotor (2), wobei an dem ersten Rotor (2) Permanentmagnete (3) angebracht sind, mit einem an einer Ausgangswelle (4) befestigten zweiten Rotor (5), wobei an dem zweiten Rotor (5) Permanentmagnete (6) angebracht sind, und mit einem Stator (8) mit mindestens einer Statorwicklung, wobei der Stator (8) gegenüber dem ersten Rotor (2) und dem zweiten Rotor (5) axial verschiebbar gelagert ist,
wobei der Stator (8) am äußeren Umfang des Stators (8) ausgebildete Nuten (10) für die Aufnahme der mindestens einen Statorwicklung aufweist,
wobei der Stator (8) aus mehreren übereinander geschichteten und miteinander verbundenen Blechlagen (9) besteht, und
wobei in jeder Blechlage (9) an denselben Stellen die Lagerungsöffnungen (12) für die Lagerung des Stators (8) in der entsprechenden elektrischen Maschine ausgebildet sind, **dadurch gekennzeichnet, dass** der Stator (8) an den in den einzelnen Blechlagen (9) des Stators (8) ausgebildeten Lagerungsöffnungen (12) gegenüber dem ersten Rotor (2) und dem zweiten Rotor (5) axial verschiebbar gelagert ist, und
dass in eine erste Lagerungsöffnung (12) des Stators (8) ein Linearwälzlager zur Führung des Stators (9) und in eine zweite Lagerungsöffnung (12) ein mit einem hydraulischen Kolben zusammenwirkender hydraulischer Zylinder zur axialen Verschiebung des Stators (8) eingesetzt ist.

2. Elektrisches Getriebe nach Anspruch 1,
**dadurch gekennzeichnet,**
**dass** die Nuten (10) für die Statorwicklung in jeder Blechlage (9) an denselben Stellen ausgebildet sind.

3. Elektrisches Getriebe nach Anspruch 1 oder 2,
**dadurch gekennzeichnet,**
**dass** in jeder Blechlage (9) die jeweilige Blechlage (9) durchdringende Wasserkanalöffnungen (11) derart ausgebildet sind, dass die einzelnen Wasserkanalöffnungen (11) der übereinander geschichteten Blechlagen (9) mindestens einen durch den Stator (8) verlaufenden Wasserkanal bilden.

4. Elektrisches Getriebe nach Anspruch 3,
**dadurch gekennzeichnet,**
**dass** die Wasserkanalöffnungen (11) in den einzelnen Blechlagen (9) derart ausgebildet sind, dass die Wasserkanalöffnungen (11) von jeweils zwei in dem Stator (8) benachbarten Blechlagen (9) zueinander versetzt angeordnet sind und sich teilweise überlappen.

5. Elektrisches Getriebe nach Anspruch 4,
**dadurch gekennzeichnet,**
**dass** die Wasserkanalöffnungen (11) in den einzelnen Blechlagen (9) derart ausgebildet sind, dass der durch den Stator (8) verlaufende Wasserkanal durch zueinander abwechselnd nach links und nach rechts versetzte Wasserkanalöffnungen (11) der einzelnen Blechlagen (9) gebildet ist.

6. Elektrisches Getriebe nach einem der vorhergehenden Ansprüche,
**dadurch gekennzeichnet,**
**dass** der Stator (8) bzw. die einzelnen Blechlagen (9) ringförmig sind, und dass die Lagerungsöffnungen (12) in jeder Blechlage (9) an der Innenseite des Rings ausgebildet sind, während die Nuten (10) für die Statorwicklung an der Außenseite des Rings ausgebildet sind.

7. Elektrisches Getriebe nach einem der vorhergehenden Ansprüche,
**dadurch gekennzeichnet,**
**dass** die einzelnen übereinander geschichteten Blechlagen (9) durch Schweißnähte, durch Stanzpaketieren und/oder durch Zuganker miteinander verbunden sind.

8. Elektrisches Getriebe nach einem der vorhergehenden Ansprüche,
**dadurch gekennzeichnet,**
**dass** in die Nuten (10) des Stators (8) mindestens eine Statorwicklung aufgebracht und mit dem Stator (8) bzw. den einzelnen Blechlagen (9) vergossen ist.

9. Elektrisches Getriebe nach einem der vorhergehenden Ansprüche,
**dadurch gekennzeichnet,**
**dass** die einzelnen übereinander geschichteten Blechlagen (9) des Stators (8) gegeneinander elektrisch isoliert sind.

## Claims

1. Electric gear mechanism
having a first rotor (2) which is fastened to an input shaft (1), with permanent magnets (3) being attached to the first rotor (2), having a second rotor (5) which is fastened to an output shaft (4), with permanent magnets (6) being attached to the second rotor (5), and having a stator (8) having at least one stator winding, with the stator (8) being mounted such that it can be axially displaced in relation to the first rotor (2) and the second rotor (5),
with the stator (8) having slots (10), which are formed on the outer circumference of the stator (8), for receiving the at least one stator winding,
with the stator (8) comprising a plurality of sheet-metal layers (9) which are layered one above the other and are connected to one another, and
with the mounting openings (12) for mounting the stator (8) in the corresponding electrical machine being formed at the same points in each sheet-metal layer (9),
**characterized in that** the stator (8) is mounted such that it can be axially displaced in relation to the first rotor (2) and the second rotor (5) at the mounting openings (12) which are formed in the individual sheet-metal layers (9) of the stator (8), and
**in that** a linear roller bearing for guiding the stator (9) is inserted into a first mounting opening (12) in the stator (8), and a hydraulic cylinder, which interacts with a hydraulic piston, for axially displacing the stator (8) is inserted into a second mounting opening (12).

2. Electric gear mechanism according to Claim 1,
**characterized**
**in that** the slots (10) for the stator winding are formed at the same points in each sheet-metal layer (9).

3. Electric gear mechanism according to Claim 1 or 2,
**characterized**
**in that** water duct openings (11) which pass through the respective sheet-metal layer (9) are formed in each sheet-metal layer (9) in such a way that the individual water duct openings (11) in the sheet-metal layers (9) which are layered one above the other form at least one water duct which runs through the stator (8).

4. Electric gear mechanism according to Claim 3,
**characterized**
**in that** the water duct openings (11) are formed in the individual sheet-metal layers (9) in such a way that the water duct openings (11) in in each case two sheet-metal layers (9), which are adjacent in the stator (8), are arranged offset to one another and partially overlap.

5. Electric gear mechanism according to Claim 4,
**characterized**
**in that** the water duct openings (11) are formed in the individual sheet-metal layers (9) in such a way that the water duct which runs through the stator (8) is formed by water duct openings (11), which are offset alternately to the left and to the right in relation to one another, in the individual sheet-metal layers (9).

6. Electric gear mechanism according to one of the preceding claims,
**characterized**
**in that** the stator (8) or the individual sheet-metal layers (9) are annular, and in that the mounting openings (12) in each sheet-metal layer (9) are formed on the inside of the ring, while the slots (10) for the stator winding are formed on the outside of the ring.

7. Electric gear mechanism according to one of the preceding claims,
**characterized**
**in that** the individual sheet-metal layers (9), which are layered one above the other, are connected to one another by weld seams, by punch-stacking and/or by tie rods.

8. Electric gear mechanism according to one of the preceding claims,
**characterized**
**in that** at least one stator winding is fitted in the slots (10) of the stator (8) and is encapsulated by the stator (8) or the individual sheet-metal layers (9).

9. Electric gear mechanism according to one of the preceding claims,
**characterized**
**in that** the individual sheet-metal layers (9), which are layered one above the other, of the stator (8) are electrically insulated from one another.

## Revendications

1. Transmission électrique,
comprenant un premier rotor (2) fixé à un arbre d'entrée (1), des aimants permanents (3) étant montés sur le premier rotor (2), comprenant un deuxième rotor (5) fixé à un arbre de sortie (4), des aimants permanents (6) étant montés sur le deuxième rotor (5), et comprenant un stator (8) doté d'au moins un enroulement de stator, le stator (8) étant monté de manière axialement déplaçable par rapport au premier rotor (2) et au deuxième rotor (5),
le stator (8) comprenant des rainures (10) réalisées sur la périphérie extérieure du stator (8) pour la réception de l'au moins un enroulement de stator,
le stator (8) étant constitué de plusieurs couches en tôle (9) superposées et reliées les unes aux autres et
les ouvertures de montage (12) pour le montage du stator (8) dans la machine électrique correspondante étant réalisées dans chaque couche de tôle (9) aux mêmes emplacements,
**caractérisée en ce que** le stator (8) est monté de manière axialement déplaçable par rapport au premier rotor (2) et au deuxième rotor (5) au niveau des ouvertures de montage (12) réalisées dans les couches de tôle individuelles (9) du stator (8) et
**en ce qu'**un palier à roulement linéaire pour le guidage du stator (8) est inséré dans une première ouverture de montage (12) du stator (8) et un vérin hydraulique coopérant avec un piston hydraulique pour le déplacement axial du stator (8) est inséré dans une deuxième ouverture de montage (12).

2. Transmission électrique selon la revendication 1,
**caractérisée en ce que**
les rainures (10) pour l'enroulement de stator sont réalisées aux mêmes emplacements dans chaque couche de tôle (9).

3. Transmission électrique selon la revendication 1 ou 2,
**caractérisée en ce que**
des ouvertures de conduit d'eau (11) traversant la couche de tôle respective (9) sont réalisées dans chaque couche de tôle (9) de telle sorte que les ouvertures de conduit d'eau individuelles (11) des couches de tôle superposées (9) forment au moins un conduit d'eau s'étendant à travers le stator (8).

4. Transmission électrique selon la revendication 3,
**caractérisée en ce que**
les ouvertures de conduit d'eau (11) sont réalisées dans les couches de tôle individuelles (9) de telle sorte que les ouvertures de conduit d'eau (11) de deux couches de tôles respectives (9) adjacentes dans le stator (8) sont disposées de manière décalée l'une par rapport à l'autre et se chevauchent partiellement.

5. Transmission électrique selon la revendication 4,
**caractérisée en ce que**
les ouvertures de conduit d'eau (11) sont réalisées dans les couches de tôle individuelles (9) de telle sorte que le conduit d'eau s'étendant à travers le stator (8) est formé par des ouvertures de conduit d'eau (11) des couches de tôle individuelles (9) qui sont décalées les unes par rapport aux autres en alternance vers la gauche et vers la droite.

6. Transmission électrique selon l'une quelconque des revendications précédentes,
**caractérisée en ce que**
le stator (8) ou les couches de tôle individuelles (9) sont en forme d'anneau et **en ce que** les ouvertures de montage (12) dans chaque couche de tôle (9) sont réalisées sur le côté intérieur de l'anneau, tandis que les rainures (10) pour l'enroulement de stator sont réalisées sur le côté extérieur de l'anneau.

7. Transmission électrique selon l'une quelconque des revendications précédentes,
**caractérisée en ce que**
les couches de tôle individuelles superposées (9) sont reliées les unes aux autres par des joints de soudure, par mise en paquet par estampage et/ou par des tirants.

8. Transmission électrique selon l'une quelconque des revendications précédentes,
**caractérisée en ce**
**qu'**au moins un enroulement de stator est appliqué dans les rainures (10) du stator (8) et est scellé avec le stator (8) ou les couches de tôle individuelles (9).

9. Transmission électrique selon l'une quelconque des revendications précédentes,
**caractérisée en ce que**
les couches de tôle individuelles superposées (9) du stator (8) sont isolées électriquement les unes par rapport aux autres.
